(19) Europäisches Patentamt
European Patent Office
Office européen des brevets

(11) Veröffentlichungsnummer: **0 147 743**
**B1**

# (12) EUROPÄISCHE PATENTSCHRIFT

(45) Veröffentlichungstag der Patentschrift: **28.06.89**

(21) Anmeldenummer: **84115406.5**

(22) Anmeldetag: **14.12.84**

(51) Int. Cl.⁴: **C 08 G 73/04**, B 01 D 17/04, C 08 L 79/00, C 10 G 33/04, C 08 G 65/32

## (54) Vernetzte oxalkylierte Polyalkylenpolymaine und ihre Verwendung als Erdölemulsionsspalter.

(30) Priorität: **28.12.83 DE 3347257**

(43) Veröffentlichungstag der Anmeldung: **10.07.85 Patentblatt 85/28**

(45) Bekanntmachung des Hinweises auf die Patenterteilung: **28.06.89 Patentblatt 89/26**

(84) Benannte Vertragsstaaten: **DE FR GB IT NL**

(56) Entgegenhaltungen:
**DE-A- 2 238 995**
**DE-B- 2 719 978**
**US-A- 4 066 494**
**US-A- 4 209 422**
**PATENT ABSTRACTS OF JAPAN, Band 4, Nr. 140 (C-26)[622], 3. Oktober 1980; & JP - A - 55 89333 (ASAHI GLASS) 05.07.1980**

(73) Patentinhaber: **BASF Aktiengesellschaft**
**Carl-Bosch-Strasse 38**
**D-6700 Ludwigshafen (DE)**

(72) Erfinder: **Baur, Richard, Dr.**
**Schillerstrasse 10**
**D-6701 Dannstadt-Schauernheim (DE)**
Erfinder: **Oppenlaender, Knut, Dr.**
**Otto-Dill-Strasse 23**
**D-6700 Ludwigshafen (DE)**
Erfinder: **Barthold, Klaus, Dr.**
**Paulusbergstrasse 4**
**D-6800 Mannheim 51 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

## Beschreibung

Die vorliegende Erfindung betrifft neue vernetzte oxalkylierte Polyalkylenpolyamine und ihre Verwendung als Erdölemulsionsspalter zur Schnellentwässerung von Rohölen.

Wasser-in-Öl-Emulsionen werden im allgemeinen, ihrer Viskosität entsprechend, häufig unter hohem Energieaufwand auf Temperaturen von 40 °C und darüber erwärmt, um sie dann anschließend mittels (elektro) chemischen Methoden auf den geforderten niedrigen Gehalt von Wasser, Salz und eventuell auch von Restemulsion einzustellen.

So ist es bekannt, Blockpolymerisate aus Ethylen- und/oder Propylenoxid als Spalter für Wasser-in-Öl-Emulsionen einzusetzen. Beispielsweise wird in der DE-A-1 545 250 ein Entwässerungsverfahren beschrieben, bei dem verschiedene Alkylenoxidpolymerisate und davon abgeleitete Verbindungen mit hydrophilen Endgruppen den Wasser-in-Öl-Emulsionen zugesetzt werden. Diese Stoffe entfalten ihre volle Wirksamkeit zu langsam und häufig nur bei erhöhter Temperatur. Zudem hinterlassen sie nach ihrer Anwendung einen noch zu großen Gehalt an Restwasser, Restsalz oder Restemulsion, und vor allem sind sie nur bei wenigen Ölsorten genügend wirksam.

Es ist aber erwünscht, Wasser-in-Öl-Emulsionen ohne weiteres Erwärmen bereits bei Fördertemperatur, d. h. üblicherweise zwischen 10 und 40 °C, durch Zusatz von geeigneten Produkten zu spalten.

Da es aufgrund des verschiedenen Aufbaus der Rohöle nicht möglich ist, einen Erdölemulsionsspalter zu finden, der für die Rohöle jeglicher Provenienz wirksam ist, besteht zudem großes Interesse an solchen Produkten, die zumindest bei einer größeren Anzahl an verwandten Ölsorten als Spalter eingesetzt werden können.

Nach Vorschlag der DE-C-2 227 546 sollen oxalkylierte Polyalkylenpolyamine auf Basis von an den Stickstoffatomen vollständig jeweils 10- bis 300-fach oxalkylierten Polyalkylenpolyaminen, die 50 bis 2 000 wiederkehrende Alkylenimin-Einheiten im Molekül aufweisen, für diesen Zweck verwendet werden.

Die DE-B-2 435 713 lehrt, daß auch quaternierte Polyalkylenpolyaminderivate dieser Art gut wirksam sind.

In der DE-C-2 013 820 wird die Verwendung von oxyalkylierten Isoalkylphenol-Formaldehyd-Harzen in Mischung mit verschiedenen Veresterungsprodukten für den genannten Zweck beschrieben.

Schließlich werden in der DE-C-2 719 978 Mischungen aus den genannten Polyalkylenpolyaminderivaten bzw. ihrer quaternierten Form mit oxalkylierten Isoalkylphenol-Formaldehyd-Harzen zur Lösung der genannten Aufgabe herangezogen.

Es wurden nun neue vernetzte oxalkylierte Polyalkylenpolyamine gefunden, erhältlich durch Umsetzung von an den Stickstoffatomen vollständig jeweils 10- bis 300-fach oxalkylierten Polyalkylenpolyaminen, die 50 bis 2 000 wiederkehrende Alkylenimin-Einheiten im Molekül aufweisen, mit 0,5 bis 10 Gew.%, bezogen auf die oxalkylierten Polyalkylenpolyamine, einer vernetzenden Verbindung, die mindestens zwei funktionelle Gruppen aufweist, die zur Umsetzung mit den alkoholischen Endgruppen der oxalkylierten Polyalkylenpolyamine befähigt sind.

Diese neuen Verbindungen zeigen bei Verwendung als Erdölemulsionsspalter eine unerwartet günstige Wirkung.

Die den unvernetzten oxalkylierten Polyalkylenpolyaminen zugrundeliegenden Polyalkylenpolyamine, die 50 bis 2 000 wiederkehrende Alkylenimin-Einheiten im Molekül aufweisen, sind in bekannter Weise aus Ethylenimin und/oder 1,2-Propylenimin erhältlich. Vorzugsweise geht man von Ethylenimin aus.

Für die Oxalkylierung der Polyalkylenpolyamine kommen sämtliche gängigen Alkylenoxide, wie Ethylenoxid, 1,2-Propylenoxid, 1,2- und 2,3-Butylenoxid, Styroloxid oder Cyclohexenoxid in Betracht, wobei 1,2-Propylen- und Ethylenoxid bevorzugt sind. Insbesondere verwendet man 1,2-Propylenoxid allein oder eine Mischung aus 1,2-Propylenoxid und Ethylenoxid.

Die verschiedenen Alkylenoxide können einzeln oder zusammen, und zwar nach dem Schema einer Blockcopolymerisation oder einer Mischpolymerisation mit den Polyalkylenpolyaminen zur Reaktion gebracht werden.

Die genaue Herstellung dieser oxalkylierten Polyalkylenpolyamine ist in der DE-C-2 227 546 beschrieben.

Die vernetzenden Verbindungen müssen mindestens zwei funktionelle Gruppen aufweisen, die zur Umsetzung mit den alkoholischen Endgruppen der oxalkylierten Polyalkylenpolyamine befähigt sind.

Solche funktionellen Gruppen sind z. B. die Isocyanatgruppe, die Carboxylgruppe, Alkoxycarbonylgruppen mit niederen Alkylrest und die Glycidylethergruppe.

Als vernetzende Verbindungen sind beispielsweise zu nennen aliphatische und aromatische Diisocyanate, Dicarbonsäuren, Diester von Dicarbonsäuren mit niederen Alkoholen, Bisglycidylether von aliphatischen und aromatischen Polyhydroxylverbindungen.

Als einzelne Verbindungen sind hervorzuheben Hexamethylendiisocyanat, Toluylendiisocyanat, Diphenylmethandiisocyanat, Adipinsäure, Glutarsäure, Bernsteinsäure oder Gemische dieser Carbonsäuren, die Methyl- oder Ethylester dieser Carbonsäuren oder ihre Gemische und die Bisglycidylether der Hydroxylverbindungen Bisphenol A, Diphenylolmethan, Pentaerythrit, Trimethylolpropan, Ethan-1,2-diol, Propan-1,2-diol, Butan-1,2-diol, Butan-2,3-diol und Glycerin.

Besonders bevorzugt ist die Verwendung von Hexamethylendiisocyanat und des Bisglycidylethers von Bisphenol A als vernetzende Verbindungen.

Die Vernetzung der oxalkylierten Polyalkylenpolyamine erfolgt üblicherweise in Anwesenheit eines Lösungsmittels. (Bei Verwendung der Bisglycidylether als vernetzende Verbindungen kann aber auch lösungsmittelfrei gearbeitet werden).

Es kommen solche Lösungsmittel in Betracht, die unter den Reaktionsbedingungen inert sind, z. B. Toluol, Xylol, Chlorbenzol, N,N-Dimethylformamid und N-Methylpyrrolidon.

Um die Vernetzung durchzuführen, legt man eine Lösung der oxalkylierten Polyalkylenpolyamine in einem inerten Lösungsmittel vor, erwärmt diese Lösung auf eine Temperatur von 30 bis 160 °C, vorzugsweise 40 bis 110 °C, und gibt dann langsam eine Lösung der vernetzenden Verbindung zu, die 0,5 bis 10 Gew.-%, vorzugsweise 1 bis 6 Gew.%, jeweils bezogen auf die Menge des oxalkylierten Polyalkylenpolyamins, der entsprechenden vernetzenden Verbindung enthält.

Anschließend wird im genannten Temperaturbereich bis zur vollständigen Umsetzung weitergerührt, die im allgemeinen nach 2 bis 8 Stunden erfolgt ist.

Bei denjenigen Umsetzungen, bei denen Wasser als Reaktionsprodukt entsteht, ist es zweckmäßig, dieses Reaktionswasser durch azeotrope Destillation mit dem jeweiligen Lösungsmittel zu entfernen.

Da aufgrund der besseren Dosierbarkeit die vernetzten Produkte bei ihrer Anwendung als Erdölemulsionsspalter bevorzugt in Lösung eingesetzt werden, lassen sich die resultierenden Reaktionslösungen direkt verwenden.

Arbeitet man, wie dies im Falle der Bisglycidylether möglich ist, in Abwesenheit von Lösungsmittel oder hat man nach durchgeführter Vernetzung zunächst das dort verwendete Lösungsmittel entfernt, so werden diese lösungsmittelfreien Produkte vorzugsweise ebenfalls in Lösung gebracht. Als Lösungsmittel können Mischungen von organischen Lösungsmitteln (z. B. Methanol) mit Wasser oder organische Lösungsmittel allein mit Siedegrenzen zwischen 50 und 200 °C dienen, z. B. Toluol, Xylole, Tetrahydrofuran, Dioxan, niedere Alkohole und Leichtbenzinfraktionen der genannten Siedegrenze.

Die erfindungsgemäßen Produkte können entweder allein oder auch in Mischung mit anderen an sich bekannten Stoffen als Erdölemulsionsspalter eingesetzt werden.

Eine bevorzugte Mischung besteht aus 25 bis 75 Gew.%, vorzugsweise 40 bis 60 Gew.%, der erfindungsgemäße vernetzten oxalkylierten Polyalkylenpolyamine und 75 bis 25 Gew.%, vorzugsweise 60 bis 40 Gew.%, jeweils bezogen auf die Mischung, eines Oxethylierungs- und/oder Oxpropylierungsproduktes eines Isoalkylphenol-Formaldehyd-Harzes, das 3 bis 30 Benzolkerne enthält, die jeweils eine Oxalkylatgruppe mit 4 bis 50 Alkylenoxideinheiten und einen in p-Stellung zur Oxalkylatgruppe gebundenen Isoalkylrest mit 8 bis 12 Kohlenstoffatomen tragen.

Die oxakylierten Alkylphenol-Formaldehyd-Harze haben die Formel II

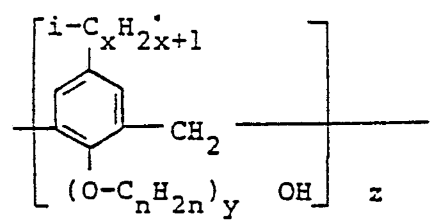

(II)

in der x eine ganze Zahl von 8 bis 12, n eine ganze Zahl von 2 bis 3, y eine ganze Zahl von 4 bis 50 und z eine ganze Zahl von 3 bis 30 bedeutet.

Ihre Herstellung ist aus der DE-C-2 013 820 bekannt.

Eine andere bevorzugte Mischung besteht aus 25 bis 75 Gew.%, vorzugsweise 40 bis 60 Gew.%, der erfindungsgemäß vernetzten oxalkylierten Polyalkylenpolyamine und 75 bis 25 Gew.%, vorzugsweise 60 bis 40 Gew.%, jeweils bezogen auf die Mischung, eines Blockcopolymerisats der allgemeinen Formel I

$$R—B—A—B—R \quad (I),$$

in der A für einen Poly-1,2-propylenoxidblock des Molekulargewichts 600 bis 3 000 und B für Polyethylenoxidblöcke des Molekulargewichts 600 bis 3 500 stehen und in der die Reste R Chlor, Alkoxyethoxy- oder Acyloxygruppen bedeutet, welche Reste an die Stelle der endständigen Hydroxylgruppen der Blockcopolymerisate B—A—B getreten sind.

Solche Blockcopolymerisate sind Gegenstand der DE-A-1 545 250.

Die erfindungsgemäßen vernetzten oxalkylierten Polyalkylenpolyamine oder ihre Mischungen mit oxalkylierten Isoalkylphenol-Formaldehyd-Harzen bzw. mit den genannten Blockcopolymerisaten werden, wie oben erwähnt, bei ihrer Verwendung als Erdölemulsionsspalter bevorzugt in Lösung eingesetzt. Diese Lösungen werden zweckmäßig auf einen Wirksubstanzgehalt (Gehalt an Spalter) von 0,5 bis 50 Gewichtsprozent eingestellt. Bei der Spaltung werden die Lösungen den Rohölen bevorzugt an den Sonden (im Feld) zugegeben. Die Spaltung verläuft dann bereits bei der Temperatur der frisch geförderten Wasser-in-Öl-Emulsion in einer solchen Geschwindigkeit, daß die Emulsion bereits auf dem Weg zu der Aufbereitungsanlage gebrochen werden kann. Sie wird dort in einem gegebenenfalls

beheizten Abscheider und eventuell unter Zuhilfenahme eine elektrischen Feldes ohne Schwierigkeiten in Reinöl und Salzwasser getrennt.

Die Spalter werden den Rohöl-Emulsionen zweckmäßig in Mengen von 1 bis 1 000 ppm, vorzugsweise 10 bis 100 ppm, bezogen auf das Gewicht der zu spaltenden Emulsion, bei Temperaturen zwischen 10 und 80 °C zugesetzt.

Die erfindungsgemäß anzuwendenden Schnellspalter können für Wasser-in-Öl-Emulsionen mit etwa 0,1 bis 99 Gewichtsprozent Salzwassergehalt verwendet werden. Als Öle, die auf diese Weise schnell entwässert werden können, kommen Rohölemulsionen der verschiedensten Provenienzen in Betracht.

Die Trennung der Wasser-in-Öl-Emulsionen verläuft ohne Zufuhr von zusätzlicher Wärme im Rahmen der angegebenen Temperaturgrenzen außerordentlich rasch und nahezu quantitativ.

Die neuen Spalter eignen sich besonders zur Spaltung schwieriger Emulsionen, wobei besonders saubere Abwässer erzielt werden. Sie arbeiten wegen ihres extrem niedrigen Verbrauchs sehr wirtschaftlich. Weiterhin trennen sie die Emulsionen sehr schnell, spalten völlig durch und arbeiten auch bei Temperaturen, die nur wenig oberhalb des Rohölstockpunktes liegen.

Überraschenderweise zeigen die neuen vernetzten oxalkylierten Polyalkylenpolyamine auch in Mischungen mit bekannten Spaltern deutlich bessere Ergebnisse als die, die sich bei der Anwendung der bekannten Spalter allein ergeben.

Die folgenden Beispiele sollen die Erfindung näher erläutern.

I. Herstellung der Ausgangsprodukte

Oxalkyliertes Polyethylenpolyamin A1
(zweistufiges Verfahren)

1. Stufe (thermisch)

172 g (2 Mol) Polyethylenpolyamin mit etwa 100 wiederkehrenden Ethylenimineinheiten wurden als wäßrige Lösung (50 Gew.%) in $V_2A$-Rührautoklaven vorgelegt und 116 g (2 Mol) 1,2-Propylenoxid portionsweise bei 90 bis 100 °C eingepreßt.

| | |
|---|---|
| Zeit | 2 Stunden |
| Überdruck | 6 bar |
| Temperatur | 90 bis 100 °C |

Anschließend wurde bei 100 °C/19,7 bis 26,3 mbar das Wasser destillativ entfernt.

2. Stufe (katalytisch)

15,6 g (0,15 Mol) Produkt aus Stufe 1 und 0,624 g (4 Gew.%, bezogen auf das Produkt aus Stufe 1.) KOH-Pulver wurden zusammen im $V_2A$-Rührautoklaven vorgelegt und anschließend wurden 687 g (11,85 Mol) 1,2-Propylenoxid (PrO) portionsweise bei 135 °C und 132 g (3 Mol) Ethylenoxid (EO) portionsweise bei 125 °C aufgepreßt.

| | |
|---|---|
| Zeit | 6 Stunden |
| Überdruck | 6-8 bar |
| Temperatur | 135 °C (PrO) |
| Zeit | 2 Stunden (EO) |
| Temperatur | 125 °C (EO) |

Es wurde 4 Stunden bis zur Druckkonstanz nachgerührt. Das erhaltene Produkt konnte direkt verwendet werden. Es bestand aus dem Polyethylenpolyamin, das nunmehr ca. 80 Mol 1,2-Propylenoxid und 20 Mol Ethylenoxid angelagert enthält.

Oxalkyliertes Polyethylenpolyamin A2
(zweistufiges Verfahren)

1. Stufe (thermisch)

172 g (2 Mol) Polyethylenpolyamin mit etwa 1 000 wiederkehrenden Ethylenimineinheiten wurden als wäßrige Lösung (50 Gew.%) im $V_2A$-Rührautoklaven vorgelegt und 116 g (2 Mol) 1,2-Propylenoxid portionsweise bei 90 bis 100 °C eingepreßt.

| | |
|---|---|
| Zeit | 3 Stunden |
| Überdruck | 6 bar |
| Temperatur | 90 bis 100 °C. |

Anschließend wurde bei 100 °C/19,7 bis 26,3 mbar das Wasser destillativ entfernt.

2. Stufe (katalytisch)

15,2 g (0,15 Mol) Produkt aus Stufe 1 und 0,624 g (4 Gew.%, bezogen auf das Produkt aus Stufe 1.) KOH-Pulver wurden zusammen im $V_2A$-Rührautoklaven vorgelegt und anschließend wurden 783 g (13,5 Mol) 1,2-Propylenoxid portionsweise bei 135 °C aufgepreßt.

| | |
|---|---|
| Zeit | 6-8 Stunden |
| Überdruck | max. 10 bar |
| Temperatur | 135 °C. |

Es wurde 4 Stunden bis zur Druckkonstanz nachgerührt. Das erhaltene Produkt konnte direkt verwendet werden. Es bestand aus dem Polyethylenpolyamin, das ca. 90 Mol 1,2-Propylenoxid angelagert enthält.

Oxalkyliertes Polyethylenpolyamin A3
(zweistufiges Verfahren)

1. Stufe (thermisch)

172 g (2 Mol) Polyethylenpolyamin mit etwa 50 wiederkehrenden Ethylenimineinheiten wurden als wäßrige Lösung (50 Gew.%) im $V_2A$-Rührautoklaven vorgelegt und 116 g (2 Mol) 1,2-Propylenoxid portionsweise bei 90 bis 100 °C eingepreßt.

| | |
|---|---|
| Zeit | 3 Stunden |
| Überdruck | 6 bar |
| Temperatur | 90 bis 100 °C |

Anschließend wurde bei 100 °C/19,7 bis 26,3 mbar das Wasser destillativ entfernt.

2. Stufe (katalytisch)

15,6 g (0,15 Mol) Produkt aus Stufe 1 und 0,624 g (4 Gew.%, bezogen auf das Produkt aus Stufe 1.) KOH-Pulver wurden zusammen im $V_2A$-Rührautoklaven vorgelegt und anschließend wurden 565 g (9,75 Mol) 1,2-Propylenoxid portionsweise bei 135 °C aufgepreßt.

| | |
|---|---|
| Zeit | 6 Stunden |
| Überdruck | max. 10 bar |
| Temperatur | 135 °C |

Es wurde 4 Stunden bis zur Druckkonstanz nachgerührt.
Das erhaltene Produkt konnte direkt verwendet werden. Es bestand aus dem Polyethylenpolyamin, das nunmehr ca. 65 Mol 1,2-Propylenoxid angelagert enthält.

II. Herstellung der vernetzten Produkte

Erdölemulsionsspalter (E1)

75 g Al wurden in 280 g Xylol gelöst. Bei 40 °C tropfte man langsam eine Lösung von 1,5 g Hexamethylendiisocyanat in 26 g Xylol zu. Man rührte 4 Stunden bei 60 °C bis zur vollständigen Umsetzung des Isocyanats nach.
Man erhielt eine 20 gew.%ige Lösung von El in Xylol.

Erdölemulsionsspalter (E2)

75 g A3 wurden in 280 g Xylol gelöst. Bei 50 °C tropfte man langsam eine Lösung von 1,5 g Hexamethylendiisocyanat in 10 g Xylol zu. Man rührte 4 Stunden bei 80 °C nach. Anschließend wurde das Lösungsmittel am Wasserstrahlvakuum entfernt (ca. 80 °C).

Erdölemulsionsspalter (E3)

75 g A2 wurden in 290 g Xylol gelöst. Bei 40 °C tropfte man langsam eine Lösung von 0,75 g Hexamethylendiisocyanat in 13 g Xylol zu. Man rührte 4 Stunden bei 80 °C nach.
Man erhielt eine 20 gew.%ige Lösung von E3 in Xylol.

Erdölemulsionsspalter (E4)

75 g A3 wurden in 67 g Xylol vorgelegt und mit 0,15 g KOH-Pulver versetzt. Bei 130 °C tropfte man langsam eine Lösung von 2,25 g des Bisglycidylethers von Bisphenol A in 10 g Xylol zu. Man erhitzte 2 Stunden unter Rückfluß. Nach der Neutralisation mit 0,95 g Dodecylbenzolsulfonsäure wurde das Lösungsmittel am Wasserstrahlvakuum entfernt.

Erdölemulsionsspalter (E5)

75 g A2 wurden in 76,5 g Toluol gelöst und mit 1,5 g einer Mischung aus 30 Gew.% Bernsteinsäure, 45 Gew.% Glutarsäure und 25 Gew.% Adipinsäure versetzt. Man erhitzte solange zum Sieden, bis die berechnete Wassermenge (0,4 g) abgeschieden war.

Man erhielt eine 50 gew.%ige Lösung von E5 in Toluol.

Erdölemulsionsspalter (E6)

75 g A3 wurden in 60 g Xylol gelöst. Man tropfte bei 50 °C 1,5 g Toluylendiisocyanat in 16,5 g Xylol zu und rührte 4 Stunden bei 120 °C nach.

Man erhielt eine 50 gew.%ige Lösung von E6 in Xylol.

III. Anwendungsversuche

| Spalter | Menge (ppm) | abgespaltene Wassermenge in ml nach 10 min. | 20 min. | 30 min. | 45 min. | 1 Std. | 2 Std. | 4 Std. | 16 Std. |
|---|---|---|---|---|---|---|---|---|---|
| Norddeutsches Rohöl 1, Wassergehalt 40 Gew.%, Spalttemperatur 60°C | | | | | | | | | |
| E1 | 35 | 1 | 7 | 15 | 30 | 31 | 33 | 36 | 39 |
| Vergleichs-versuch: A1 | 35 | 2 | 5 | 12 | 23 | 27 | 19 | 30 | 31 |
| E2 | 35 | 7 | 20 | 36 | 38 | 38 | 38 | 38 | 39 |
| Vergleichs-versuch: A3 | 35 | 0 | 2 | 3 | 6 | 15 | 21 | 25 | 29 |
| E3 | 35 | 0 | 2 | 3 | 5 | 8 | 22 | 32 | 37 |
| E5 | 35 | 0 | 1 | 2 | 4 | 7 | 18 | 25 | 35 |
| Vergleichs-versuch: A2 | 35 | 0 | 1 | 2 | 3 | 5 | 14 | 21 | 29 |
| E4 | 35 | 0 | 3 | 8 | 20 | 33 | 34 | 34 | 36 |
| E6 | 35 | 1 | 7 | 15 | 30 | 31 | 33 | 34 | 35 |
| Vergleichs-versuch: A3 | 35 | 0 | 2 | 3 | 6 | 15 | 21 | 25 | 29 |

(Siehe Tabelle Seite 7 f.)

| Spalter | Menge (ppm) | abgespaltene Wassermenge in ml nach 10 min. | 20 min. | 30 min. | 45 min. | 1 Std. | 2 Std. | 4 Std. | 16 Std. |
|---|---|---|---|---|---|---|---|---|---|
| Norddeutsches Rohöl 2, Wassergehalt ca. 50 Gew.%, Spalttemperatur 27°C | | | | | | | | | |
| 1:1 Mischung aus E2 und Harzspalter gemäß DE-C-2 013 820 (Komponente A) | 50 | 10 | 36 | 43 | 50 | 52 | 52 | 52 | 52 |
| Vergleichsversuch: 1:1 Mischung der Komponenten A und B gemäß DE-C-2 719 978 | 50 | 4 | 23 | 28 | 46 | 48 | 50 | 50 | 50 |
| Norddeutsches Rohöl 3, Wassergehalt 45 Gew.%, Spalttemperatur 60°C | | | | | | | | | |
| 1:1 Mischung aus E2 und Harzspalter gemäß DE-C-2 013 820 (Komponente A) | 50 | 24 | 37 | 44 | 44 | 44 | 44 | 45 | 45 |
| Vergleichsversuch: 1:1 Mischung der Komponenten A und B gemäß DE-C-2 719 978 | 50 | 5 | 14 | 16 | 17 | 18 | 19 | 23 | 29 |

## Patentansprüche

1. Vernetzte oxalkylierte Polyalkylenpolyamine, erhältlich durch Umsetzung von an den Stickstoffatomen vollständig jeweils 10- bis 300-fach oxalkylierten Polyalkylenpolyaminen, die 50 bis 2 000 wiederkehrende Alkylenimin-Einheiten im Molekül aufweisen, mit 0,5 bis 10 Gew.%, bezogen auf die oxalkylierten Polyalkylenpolyamine, eines Vernetzers, der mindestens zwei funktionelle Gruppen aufweist, die zur Umsetzung mit den alkoholischen Endgruppen der oxalkylierten Polyalkylenpolyamine befähigt sind.

2. Vernetzte oxalkylierte Polyalkylenpolyamine gemäß Anspruch 1, erhältlich durch Umsetzung von an den Stickstoffatomen oxethylierten und/oder oxpropylierten Polyethylenpolyaminen, mit einem Vernetzer aus der Gruppe der Isocyanate Carbonsäuren, Ester mit niederem Alkoxyrest und Glycidylether.

3. Vernetzte oxalkylierte Polyalkylenpolyamine gemäß Anspruch 1, erhältlich durch Umsetzung der oxalkylierten Polyalkylenpolyamine mit 1 bis 6 Gew.%, bezogen auf die oxalkylierten Polyalkylenpolyamine, des Vernetzers.

4. Vernetzte oxalkylierte Polyalkylenpolyamine gemäß Anspruch 1, erhältlich durch Umsetzung der oxalkylierten Polyalkylenpolyamine mit einem Vernetzer aus der Gruppe, bestehend aus Hexamethylendiisocyanat, Toluylendiisocyanat, Diphenylmethandiisocyanat, Adipinsäure, Glutarsäure, Bernsteinsäure oder Gemische dieser Carbonsäuren, den Methyl- oder Ethylestern dieser Carbonsäuren oder ihrer Gemische und den Bisglycidylethern der Hydroxylverbindungen Bisphenol A, Diphenylolmethan, Pentaerythrit, Trimethylolpropan, Ethan-1,2-diol, Propan-1,2-diol, Butan-1,2-diol, Butan-2,3-diol und Glycerin.

5. Verwendung von vernetzten oxalkylierten Polyalkylenpolyaminen gemäß Anspruch 1 als Erdölemulsionsspalter.

6. Verwendung einer Mischung aus 25 bis 75 Gew.% vernetzter oxalkylierter Polyalkylenpolyamine

gemäß Anspruch 1 und 75 bis 25 Gew.%, jeweils bezogen auf die Mischung, eines Oxethylierungs- und/oder Oxpropylierungsproduktes eines Isoalkylphenyl-Formaldehyd-Harzes, das 3 bis 30 Benzolkerne enthält, die jeweils eine Oxalkylatgruppe mit 4 bis 50 Alkylenoxideinheiten und einen in p-Stellung nur Oxalkylatgruppe gebundenen Isoalkylrest mit 8 bis 12 Kohlenstoffatomen tragen, als Erdölemulsionsspalter.

7. Verwendung einer Mischung aus 25 bis 75 Gew.% vernetzter oxalkylierter Polyalkylenpolyamine gemäß Anspruch 1 und 75 bis 25 Gew.%, jeweils bezogen auf die Mischung, eines Blockcopolymerisats der allgemeinen Formel I

$$R—B—A—B—R \quad (I),$$

in der A für einen Poly-1,2-propylenoxidblock des Molekulargewichts 600 bis 3 000 und B für Polyethylenoxidblöcke des Molekulargewichts 600 bis 3 500 stehen und in der die Reste R Chlor, Alkoxyethoxy- oder Acyloxygruppen bedeuten, welche Reste an die Stelle der endständigen Hydroxylgruppen der Blockcopolymerisate B—A—B getreten sind, als Erdölemulsionsspalter.

## Claims

1. A crosslinked oxyalkylated polyalkylenepolyamine which can be obtained by reacting a polyalkylenepolyamine, which is completely oxyalkylated at the nitrogen atoms, in each case by from 10 to 300 groups, and possesses from 50 to 2,000 repeating alkyleneimine units in the molecule, with from 0.5 to 10 % by weight, based on the oxyalkylated polyalkylenepolyamine, of a crosslinking agent which possesses two or more functional groups which are capable of reacting with the terminal alcohol groups of the oxyalkylated polyalkylenepolyamine.

2. A crosslinked oxyalkylated polyalkylenepolyamine as claimed in claim 1, which can be obtained by reacting a polyethylenepolyamine which is oxyethylated and/or oxypropylated at the nitrogen atoms, with a crosslinking agent from the group of the isocyanates, carboxylic acids, esters containing a lower alkoxy radical and glycidyl ethers.

3. A crosslinked oxyalkylated polyalkylenepolyamine as claimed in claim 1, which can be obtained by reacting an oxyalkylated polyalkylenepolyamine with from 1 to 6 % by weight, based on the oxyalkylated polyalkylenepolyamine, of the crosslinking agent.

4. A crosslinked oxyalkylated polyalkylenepolyamine as claimed in claim 1, which can be obtained by reacting an oxyalkylated polyalkylenepolyamine with a crosslinking agent from the group consisting of hexamethylene diisocyanate, toluylene diisocyanate, diphenylmethane diisocyanate, adipic acid, glutaric acid, succinic acid or mixtures of these carboxylic acids, the methyl and ethyl esters of these carboxylic acids or mixtures of these, and the bisglycidyl ethers of the hydroxy compounds bisphenol A, diphenylolmethane, pentaerythritol, trimethylolpropane, ethane-1,2-diol, propane-1,2-diol, butane-1,2-diol, butane-2,3-diol and glycerol.

5. Use of a crosslinked oxyalkylated polyalkylenepolyamine as claimed in claim 1 as a demulsifying agent for oil emulsions.

6. Use of a mixture consisting of from 25 to 75 % by weight, of a crosslinked oxyalkylated polyalkylenepolyamine as claimed in claim 1 and from 75 to 25 % by weight of an oxyethylation and/or oxypropylation product of an isoalkylphenol-formaldehyde resin which contains from 3 to 30 benzene nuclei, each of which carries on oxyalkylate group of 4 to 50 alkylene oxide units and an isoalkyl radical of 8 to 12 carbon atoms which is bonded in the p-position with respect to the oxyalkylate group, the percentages in each case being based on the mixture as a demulsifying agent for oil emulsions.

7. Use of a mixture consisting of from 25 to 75 % by weight of a crosslinked oxyalkylated polyalkylenepolyamine as claimed in claim 1 and from 75 to 25 % by weight of a block copolymer of the formula I

$$R—B—A—B—R \quad (I)$$

where A is a poly-1,2-propylene oxide block having a molecular weight of from 600 to 3,000, B is a polyethylene oxide block having a molecular weight of from 600 to 3,500 and R is chlorine, alkoxyethoxy or acyloxy, the radicals R replacing the terminal hydroxyl groups of the block copolymer B—A—B and the percentages in each case being based on the mixture, as a demulsifying agent for oil emulsions.

## Revendications

1. Polyalkylène-polyamines oxalkylées et réticulées, que l'on peut obtenir par réaction de polyalkylène-polyamines complètement oxalkylées sur les atomes d'azote 10 à 300 fois suivant le cas, et présentant dans leur molécule 50 à 2 000 unités d'alkylène-imine récurrentes, avec 0,5 à 10 % en poids, sur la base des polyalkylène-polyamines oxalkylées, d'un agent de réticulation, qui présente au moins deux groupes

fonctionnels aptes à réagir avec les groupes terminaux alcooliques des polyalkylènes-polyamines oxalkylées.

2. Polyalkylène-polyamines oxalkylées et réticulées suivant la revendication 1, que l'on peut obtenir par réaction de polyéthylène-polyamines oxéthylées et/ou oxypropylées sur les atomes d'azote avec un agent de réticulation choisi parmi les isocyanates, les acides carboxyliques, les esters avec radical alkoxy inférieur et les éthers de glycidyle.

3. Polyalkylène-polyamines oxalkylées et réticulées suivant la revendication 1, que l'on peut obtenir par réaction des polyalkylène-polyamines oxalkylées avec 1 à 6 % en poids, sur la base des polyalkylène-polyamines oxalkylées, de l'agent de réticulation.

4. Polyalkylène-polyamines oxalkylées et réticulées suivant la revendication 1, que l'on peut obtenir par réaction des polyalkylène-polyamines oxalkylées avec un agent de réticulation choisi dans le groupe consistant en le diisocyanate d'hexaméthylène, le diisocyanate de toluylène, le diisocyanate de diphénylméthane, l'acide adipique, l'acide glutarique, l'acide succinique ou des mélanges de ces acides carboxyliques, les esters méthyliques ou éthyliques de ces acides carboxyliques ou leurs mélanges et les bisglycidyléthers des composés hydroxylés bisphénol A, diphényloIméthane, pentaérythrite, triméthylolpropane, éthane-1,2-diol, propane-1,2-diol butane-2,3-diol et glycérine.

5. Application des polyalkylène-polyamines oxalkylées et réticulées suivant la revendication 1 comme démulsifiants du pétrole brut.

6. Application comme démulsifiant du pétrole brut d'un mélange de 25 à 75 % en poids de polyalkylène-polyamines oxalkylées et réticulées suivant la revendication 1 et de 75 à 25 % en poids, respectivement sur la base du mélange, d'un produit d'oxéthylation et/ou d'oxypropylation d'une résine isoalkylphénolformaldéhyde contenant 3 à 30 noyaux benzéniques, qui portent respectivement un groupe oxalkylate avec 4 à 50 unités d'oxyde d'alkylène et un radical isoalkyle placé en position para par rapport au groupe oxalkylate et contenant 8 à 12 atomes de carbone.

7. Application comme démulsifiant du pétrole brut d'un mélange de 25 à 75 % en poids de polyakylène-polyamines oxalkylées et réticulées suivant la revendication 1 et de 75 à 25 % en poids, respectivement sur la base du mélange, d'un copolymère séquencé de formule générale I

$$R—B—A—B—R \qquad (I),$$

dans laquelle A représente un bloc poly-1,2-propylène-oxyde de poids moléculaire 600 à 3 000 et B représente des blocs poly-éthylène-oxyde de poids moléculaire 600 à 3 500 et dans laquelle les radicaux R désignent le chlore, des groupes alkoxyéthoxy et des groupes acyloxy, ces radicaux étant mis à la place des groupes hydroxyle terminaux des copolymères séquencés B—A—B.